Europäisches Patentamt

European Patent Office

Office européen des brevets

(11) Publication number: **0 092 893**
**B1**

(12) **EUROPEAN PATENT SPECIFICATION**

(45) Date of publication of patent specification: **10.12.86**

(51) Int. Cl.⁴: **E 02 B 3/22,** F 16 F 1/36, B 63 B 59/02

(21) Application number: **83300088.8**

(22) Date of filing: **07.01.83**

(54) **Fender.**

(30) Priority: **28.04.82 JP 70230/82**

(43) Date of publication of application:
**02.11.83 Bulletin 83/44**

(45) Publication of the grant of the patent:
**10.12.86 Bulletin 86/50**

(84) Designated Contracting States:
**DE FR GB NL**

(56) References cited:
**DE-A-2 133 380**
**DE-A-2 524 886**
**DE-A-2 856 201**
**FR-A-2 339 022**
**GB-A-1 197 534**
**GB-A-2 032 050**

(73) Proprietor: **BRIDGESTONE TIRE COMPANY LIMITED**
**10-1, Kyobashi 1-Chome Chuo-Ku**
**Tokyo (JP)**

(72) Inventor: **Kajigaya, Shinichi**
**7-26, Konan 1-chome Konan-Ku**
**Yokohama City (JP)**
Inventor: **Yamaguchi, Ikutoshi**
**27-104, Shimomachiya 1-Chome**
**Chigasaki City (JP)**

(74) Representative: **Whalley, Kevin et al**
**Marks & Clerk 57/60 Lincoln's Inn Fields**
**London WC2A 3LS (GB)**

Courier Press, Leamington Spa, England.

## Description

This invention relates to a fender which is to be arranged on a quay to absorb impact energy of a boat, ship or the like approaching the quay.

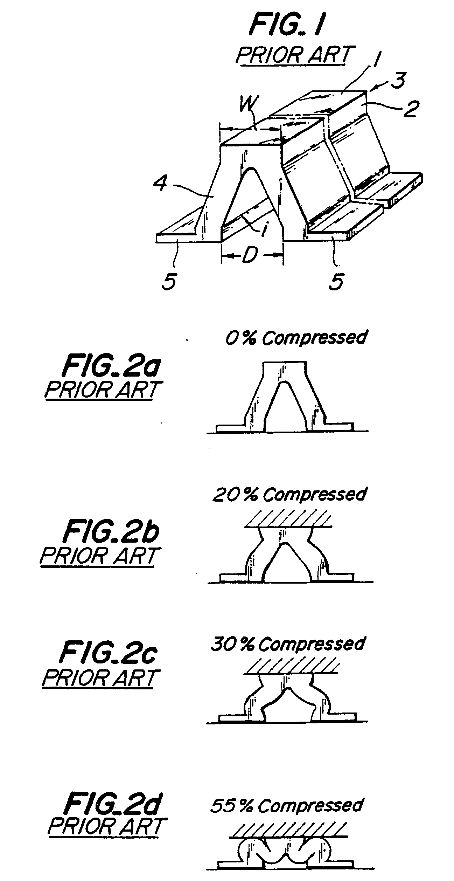

A conventional fender, particularly a V-shaped fender, is disclosed in for example Japanese Patent Application Publication No. 9,604/81. As shown in Figure 1 of the accompanying drawings, which is a perspective view of the fender disclosed in the Japanese Patent Application Publication No. 9,604/81, such a fender comprises a shock receiving portion 3 having a horizontal shock receiving top surface 1 and a pair of side surfaces 2 vertically extending from opposite ends of the top surface, a pair of supports 4 downwardly diverging from the shock receiving portion 3 and a pair of mounting portions 5 integral with the supports and extending horizontally and outwardly of the lower end of the supports 4. At the lower ends of the supports 4, at least the inner opposed surfaces are substantially vertically parallel to each other to form flat inner surfaces intersecting at obtuse angles in the proximity of the lower ends of the supports as shown at $i$ in Figure 1. Moreover, the distance D between the inner lower ends of the supports is determined by the relation $0.75W \leqq D \leqq 1.5W$, where W is the width of the shock receiving portion 3.

In use, the elongate fender as shown in Figure 1 is usually arranged on a substantially vertical quay wall with the mounting portions 5 in contact therewith with the longitudinal direction of the fender being either horizontal or vertical. For the sake of convenience of explanation in this specification, however, fenders will be referred to when they stand uprightly on their mounting portions as shown in Figure 1. Accordingly, the terms "horizontal", "vertical" and "downwardly" are intended to mean those when the fender stands on the mounting portions with the shock receiving portion being the uppermost portion.

This known fender has advantages in that excess increase of reaction forces caused in the fender is suppressed to improve its energy absorbing performance by restraining bending deformation of the supports as much as possible for an initial period of time when a load from a ship acts on the fender to delay the contact between the deformed supports of the fender and the broadside of the ship.

With such a known fender, however, as clearly shown in Figures 2a—2d of the accompanying drawings schematically illustrating compressed conditions of the fender, when the compressed ratio is more than 30%, deformation of the supports 4 at their bent portions and in the proximities thereof is considerably increased, resulting in premature damage of the fender due to fatigue of these portions. This problem becomes acute in the event of the 40% or more compressed condition of the fender the supports 4 of which are substantially collapsed into a V-shaped cross-section.

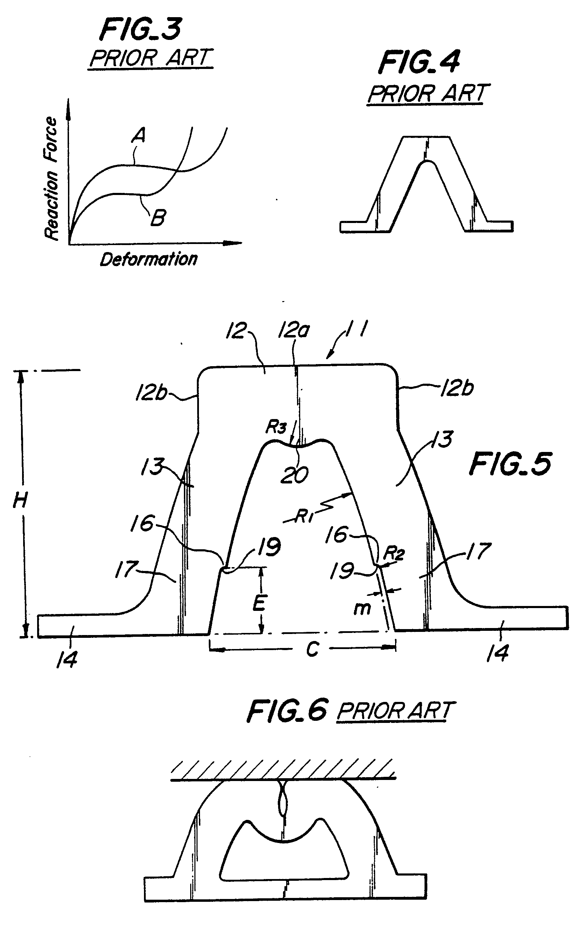

This known fender can absorb a relatively large amount of energy as shown in curve A in Figure 3 in comparison with a curve B relating to a fender having a simple V-shaped cross-section as shown in Figure 4. Figure 3 of the accompanying drawings is a graph illustrating the energy absorbing characteristics of prior art fenders, the curve B relating to the fender shown in end view in Figure 4.

Furthermore, the known fender can somewhat delay a rapid increase of reaction force relative to the deformation. However, the energy absorption of the fender is not sufficient for modern ships of giant-size and increased speed.

British Patent Specification No. GB—A— 1197534 describes a fender comprising a shock receiving portion, legs continuous with the shock receiving portion and extending away from each other in a direction away from the shock receiving portion, and mounting portions provided at the lower ends of the legs and extending outwardly, each of the legs having a reduced thickness portion abruptly decreasing its thickness from its inner surface in the proximity of the lower end of the leg.

The present invention provides a fender comprising a shock receiving portion, legs continuous to the shock receiving portion and extending away from each other, and mounting portions provided at the lower ends of the legs and extending outwardly, each of the legs having a reduced thickness portion at least from its inner surface in the proximity of the lower end of the leg; the invention is characterized in that: the legs extend from·a pair of side surfaces of the shock receiving portion perpendicular to a shock receiving surface thereof; the reduced thickness portion of each leg is formed by a step abruptly decreasing its thickness in the inner surface in the proximity of the lower end of the leg, and the height E of the step from a lower surface of the mounting portions is within $0.2H \leqq E \leqq 0.4H$, where H is the height of the fender when it stands on the mounting portions; and an inner surface of the shock receiving portion is formed with an inwardly extending ridge along the longitudinal direction of the fender.

Thus there is provided a fender the legs of which have at their lower ends reduced thickness portions abruptly decreasing in thickness at least at the inside thereof so as to outwardly deform the legs substantially uniformly upon loading to prevent local damage of the legs, and to avoid V-shaped deformation at the inside of the legs when the compressed ratio increases to prevent damage of the legs due to stress concentration.

Such a fender is also capable of preventing abrupt increase of reaction force until a shock receiving portion abuts against a base portion of the fender or a quay, thereby greatly increasing energy absorption of the fender.

Preferably the distance C between the lower ends of the reduced thickness portions of the legs of the fender according to the invention is within $0.4 \leqq C \leqq 1.2H$, where H is the height of the fender;

also, the difference $m$ in thickness between the leg and the respective reduced thickness portion is preferably within $0.01H \leqq m \leqq 0.05H$.

In a preferred embodiment of the invention, the legs of the fender are slightly bowed so as to extend slightly outwardly, and the radius of curvature of the legs is suitably more than 2.5H. Also the reduced thickness portion of each leg may be formed by providing a step formed by a curved surface having a centre of curvature located at the inner side of the fender, and the radius of such curved surface is suitably 0.005H— 0.05H.

The radius of the ridge formed on the inner surface of the shock receiving portion of the fender of the invention is preferably 0.5H—0.25H.

The invention will be further described, by way of example only, with reference to the accompanying drawings, in which:

Figure 1 is a perspective view of a fender of the prior art;

Figures 2a—2d are schematic illustrations for explaining deformed conditions of the fender shown in Figure 1, respectively;

Figure 3 is a diagram illustrating energy absorbing characteristics of prior art fenders;

Figure 4 is an end view of another prior art fender;

Figure 5 is an end view of an embodiment of a fender according to the invention;

Figure 6 is an end view illustrating an abnormally deformed condition of a fender of the prior art.

In the drawings, like parts have been designated by the same reference numerals, and in the following explanation it is assumed that each fender stands uprightly on its mounting portions.

Figure 5 shows a fender 11 which comprises a shock receiving portion 12 adapted to be in contact with the broadside of a ship and having a horizontal shock receiving surface 12a and a pair of side surfaces 12b perpendicularly extending from the ends of the shock receiving surface 12a, a pair of legs 13 extending downwardly therefrom and away from each other, and mounting portions 14 in the form of flanges extending outwardly from the lower ends of the legs 13.

Each leg 13 is formed at its inner lower end with a step 16 to form a reduced thickness portion 17 the thickness of which is abruptly decreased. The distance C between the lower ends of the portions 17 relative to the height H of the fender 11 is within the range $0.4H \leqq C \leqq 1.2H$. The difference $m$ in thickness between the leg 13 and the portion 17 is within the range $0.01H \leqq m \leqq 0.05H$. The height E of the step 16 from the lower surface of the base portion 15 is within the range $0.2H \leqq E \leqq 0.4H$. Although the step 16 is formed at the inside of each leg in Figure 5, it may be formed at both the inside and outside of the leg to form a portion 17.

In the fender shown in Figure 5, the legs 13 extending from a shock receiving portion 12 are slightly bowed away from each other so as to extend slightly outwardly. The step 16 is formed in the inner surface of each leg 13 by a small curved surface 19 having a centre of curvature located at an inner side of the fender with respect to the inner surface of the leg 13 to form the reduced thickness portion 17. The shock receiving portion 12 is formed at its inner surface with an inwardly extending round ridge 20 along the longitudinal direction of the fender. The radius $R_1$ of curvature of the legs 13 slightly curved outwardly may be more than 2.5H, where H is the height of the fender. The radius $R_2$ of the curved surface 19 may be within the range 0.005—0.05H. The radius $R_3$ of the round ridge 20 may be within the range 0.5H—0.25H. The legs 13 may be straight without being curved as shown in Figure 5.

With the fender 11 constructed as above described, when it is subjected to a load from a ship in contact therewith, the legs 13 deform outwardly starting from sufficiently low portions thereof owing to the reduced thickness portions 17, so that degrees of deformation are substantially uniform over their length in cross-section. As a result, the legs undergo fatigue substantially uniformly over their length so as to remarkably improve the durability of the fender 11. Moreover, as the fender 11 does not have any intersection $i$ of inner surfaces of the legs as in the prior art fender shown in Figure 1, no sharply acute bent portions occur in the inner surfaces of the legs, so that smoothly curved surfaces prevent considerable stress concentration.

Moreover, the portions 17 which have their thickness abruptly reduced from their inner surfaces serve to delay the relative contact of the folded inner surfaces of the legs 13, so that the time at which the reaction force increases abruptly is delayed or is later than that shown by the curve A in Figure 3, with the result that the energy absorption is sufficiently increased.

When the fender is greatly deformed, the curved surfaces 19 are located at folded portions of the insides of the legs to prevent the folded portions from forming sharp V-shaped bends, thereby effectively preventing damage of the legs due to stress concentration at the bends. Moreover, the bending all over the legs enables the fender to be compressively deformed always in the same manner and lowers compressive reaction force caused in the legs 13 to prevent the shock receiving portion 12 from deforming inwardly as shown in Figure 6. Furthermore, the ridge 20 located on the inner surface of the portion 12 serves to increase the deformation resistance thereof to more reliably prevent inward bending thereof.

As can be seen from the above description, therefore, the invention provides a fender beneficial in practical use and having a highly improved durability and considerably increased energy absorption.

**Claims**

1. A fender (11) comprising a shock receiving portion (12), legs (13) continuous to the shock receiving portion and extending away from each other, and mounting portions (14) provided at the lower ends of the said legs and extending outwardly, each of the said legs having a reduced thickness portion (17) at least from its inner surface in the proximity of the lower end of the leg, characterized in that: the said legs extend from a pair of side surfaces (12b) of the said shock receiving portion perpendicular to a shock receiving surface (12a) thereof; the said reduced thickness portion of each leg is formed by a step (16) abruptly decreasing its thickness in the inner surface in the proximity of the lower end of the leg, and the height E of the said step from a lower surface of the said mounting portions is within 0.2H≦E≦0.4H, where H is the height of the fender when it stands on the said mounting portions; and an inner surface of the said shock receiving portion is formed with an inwardly extending ridge (20) along the longitudinal direction of the fender.

2. A fender as claimed in Claim 1, characterized in that the distance C between the lower ends of the said reduced thickness portion is within 0.4≦C≦1.2H.

3. A fender as claimed in Claim 1 or 2, characterized in that the difference *m* in thickness between the said leg and the said reduced thickness portion is within 0.01H≦m≦0.05H.

4. A fender as claimed in any of Claims 1 to 3, characterized in that the said legs are slightly bowed so as to extend slightly outwardly.

5. A fender as claimed in Claim 4, characterized in that the radius of curvature ($R_1$) of the said legs is more than 2.5H.

6. A fender as claimed in Claim 4 or 5, characterized in that the said reduced thickness portion of each leg is formed by providing a step formed by a curved surface (19) having a centre of curvature located at the inner side of the fender.

7. A fender as claimed in Claim 6, characterized in that the radius ($R_2$) of the said curved surface is 0.005H—0.05H.

8. A fender as claimed in any of Claims 1 to 7, characterized in that the radius of the said ridge (20) is 0.5H—0.25H.

## Patentansprüche

1. Fender (11) mit einem Stöße aufnehmenden Abschnitt (12), Schenkeln (13), die sich an den Stöße aufnehmenden Abschnitt anschließen und voneinander wegerstrecken, und mit einem sich nach auswärts erstreckenden Befestigungsabschnitt (14) an den unteren Enden der genannten Schenkel, wobei jeder der Schenkel einen Abschnitt (17) aufweist, der zumindest auf seiner Innenseite in der Nähe des unteren Endes des Schenkels eine verringerte Stärke hat, dadurch gekennzeichnet, daß die Schenkel sich von einem Paar von Seitenflächen (12b) des Stöße aufnehmenden Abschnitts senkrecht zu dessen Stöße aufnehmender Oberfläche (12a) wegerstrecken; daß der Abschnitt mit reduzierter Stärke jedes Schenkels durch eine Stufe (16) gebildet wird, durch die dessen Stärke auf der Innenseite in der Nähe des unteren Endes des Schenkels abrupt vermindert wird; daß die Höhe E der Stufe, gemessen von der Unterfläche des Befestigungsabschnitts (14), im Bereich 0,2H≦E≦0,4H ist, wobei H die Höhe des Fenders ist, wenn er auf dem Befestigungsabschnitt steht; und daß eine innere Fläche des Stöße aufnehmenden Abschnitts mit einem sich nach innen erstreckenden Wulst (20) versehen ist, der sich in Längsrichtung des Fenders erstreckt.

2. Fender nach Anspruch 1, dadurch gekennzeichnet, daß der Abstand C zwischen den unteren Enden der eine reduzierte Stärke aufweisenden Abschnitte im Bereich von 0,4≦C≦1,2H liegt.

3. Fender nach einem der Ansprüche 1 oder 2, dadurch gekennzeichnet, daß die Differenz m der Stärken der Schenkel in den Abschnitten mit reduzierter und nicht reduzierter Stärke im Bereich von 0,01H≦m≦0,05H liegt.

4. Fender nach einem der Ansprüche 1 bis 3, dadurch gekennzeichnet, daß die Schenkel geringfügig nach außen gekrümmt sind.

5. Fender nach Anspruch 4, dadurch gekennzeichnet, daß der Krümmungsradius ($R_1$) der Schenkel größer ist als 2,5H.

6. Fender nach einem der Ansprüche 4 oder 5, dadurch gekennzeichnet, daß die Abschnitte jedes Schenkels mit reduzierter Stärke dadurch gebildet werden, daß eine Stufe mit einer gekrümmten Oberfläche (19) gebildet wird, wobei der Mittelpunkt des Krümmungsradius innenseitig des Fenders liegt.

7. Fender nach Anspruch 6, dadurch gekennzeichnet, daß der Krümmungsradius ($R_2$) der genannten Krümmung im Bereich von 0,005H bis 0,05H liegt.

8. Fender nach einem der Ansprüche 1—7, dadurch gekennzeichnet, daß der Krümmungsradius des Wulstes (20) im Bereich von 0,5H bis 0,25H liegt.

## Revendications

1. Un pare-choc marin (11) comportant une partie réceptrice de choc (12), des pattes (13) en continuité avec la partie réceptrice de choc et se séparant l'une de l'autre, et des parties de montage (14) prévues aux extrémités inférieures desdites pattes et se prolongeant vers l'extérieur, chacune desdites pattes présentant une zone d'épaisseur réduite (17) au moins à partir de leurs surfaces internes à proximité de l'extrémité inférieure de la patte caractérisé en ce que: lesdites pattes se prolongent à partir d'une paire de surfaces latérales (12b) de ladite partie réceptrice de choc, perpendiculairement à sa surface de réception de choc (12a); ladite zone d'épaisseur réduite de chaque patte est formée par un épaulement (16) diminuant de façon abrupte son épaisseur dans la surface interne à proximité de l'extrémité inférieure de la patte, et la hauteur E de cet épaulement à partir d'une surface inférieure desdites parties de montage est comprise dans 0,2H≤E≤0,4H, où H est la hauteur du pare-choc marin quand il repose sur lesdites parties de montage; et une surface interne de ladite partie réceptrice de choc est formée avec un galbe se prolongeant vers l'intérieur (20) dans la direction longitudinale du pare-choc marin.

2. Un pare-choc marin tel que revendiqué dans la revendication 1, caractérisé en ce que la distance C entre les extrémités inférieures desdites zones d'épaisseur réduite est comprise dans 0,4≤C≤1,2H.

3. Un pare-choc marin tel que revendiqué dans la revendication 1 ou 2, caractérisé en ce que la différence d'épaisseur *m* entre ladite patte et ladite zone d'épaisseur réduite est comprise dans 0,01H≤m≤0,05H.

4. Un pare-choc marin tel que revendiqué dans l'une quelconque des revendications 1 à 3, caractérisé en ce que lesdites pattes sont légèrement voûtées de façon à s'étendre légèrement vers l'extérieur.

5. Un pare-choc marin tel que revendiqué dans la revendication 4, caractérisé en ce que le rayon de courbure ($R_1$) desdites pattes est supérieure à 2,5H.

6. Un pare-choc marin tel que revendiqué dans la revendication 4 ou 5, caractérisé en ce que ladite zone d'épaisseur réduite de chaque patte est formée en prévoyant un épaulement formé par une surface courbe (19) présentant un centre de courbure disposé sur le côté interne du pare-choc marin.

7. Un pare-choc marin tel que revendiqué dans la revendication 6, caractérisé en ce que le rayon ($R_2$) de ladite surface courbe est 0,005H—0,05H.

8. Un pare-choc marin tel que revendiqué dans l'une quelconque des revendications 1 à 7, caractérisé en ce que le rayon dudit galbe (20) est 0,5H—0,25H.

0 092 893

**FIG. 1**
_PRIOR ART_

**FIG.2a**
_PRIOR ART_

0% Compressed

**FIG.2b**
_PRIOR ART_

20% Compressed

**FIG.2c**
_PRIOR ART_

30% Compressed

**FIG.2d**
_PRIOR ART_

55% Compressed

1

# FIG.3
## PRIOR ART

# FIG.4
## PRIOR ART

# FIG.5

# FIG.6 PRIOR ART